Europäisches Patentamt

European Patent Office

Office européen des brevets

(11) Numéro de publication : **0 448 456 B1**

(12) **FASCICULE DE BREVET EUROPEEN**

(45) Date de publication du fascicule du brevet :
25.05.94 Bulletin 94/21

(51) Int. Cl.$^5$ : **A01G 9/14,** C03C 17/00,
C03B 13/08, B32B 17/10

(21) Numéro de dépôt : **91400729.9**

(22) Date de dépôt : **19.03.91**

(54) **Vitrage pour l'éclairage naturel.**

(30) Priorité : **20.03.90 FR 9003512**

(43) Date de publication de la demande :
**25.09.91 Bulletin 91/39**

(45) Mention de la délivrance du brevet :
**25.05.94 Bulletin 94/21**

(84) Etats contractants désignés :
**AT BE CH DE DK ES FR GB GR IT LI LU NL SE**

(56) Documents cités :
**EP-A- 0 171 890
EP-A- 0 319 583
CH-A- 211 887
DE-A- 1 061 979
FR-A- 2 437 883
US-A- 2 883 799**

(73) Titulaire : **SAINT-GOBAIN VITRAGE
INTERNATIONAL**
"Les Miroirs"
**18, avenue d'Alsace
F-92400 Courbevoie (FR)**

(72) Inventeur : **Fremaux, Jacques
1 bis rue Claude Monet
F-78380 Bougival (FR)**

(74) Mandataire : **Muller, René et al
SAINT-GOBAIN RECHERCHE
39, quai Lucien Lefranc-BP 135
F-93303 Aubervilliers Cédex (FR)**

EP 0 448 456 B1

## Description

L'invention concerne un vitrage destiné à l'éclairage des locaux et en particulier à l'équipement de serres horticoles.

Lorsqu'on désire utiliser l'éclairage naturel pour des locaux de travail, de service ou de loisir sans être gêné par un contraste trop fort entre les zones d'ombre et les zones éclairées voisines, on fait appel à deux types de solution, ou bien, comme dans les ateliers d'artistes, on dirige tous les vitrages vers le nord (dans l'hémisphère nord ou vice versa dans l'hémisphère sud) ou alors, si l'ensoleillement direct est possible on équipe les baies de voilages ou bien on adapte pour toutes les verrières, uniformément, des vitrages, absorbants, réfléchissants et surtout diffusants de manière à limiter l'intensité de la lumière pénétrant dans le local et donc le contraste par rapport aux zones d'ombre. De même dans les serres, on est souvent obligé, en été, dans le cas où les verres utilisés ne sont pas diffusants, de chauler les parois vitrées pour éviter les surchauffes locales des végétaux qui leur sont particulièrement préjudiciables. En réalité, dans les deux cas, pour les gens comme pour les plantes, une bonne part de la gène est provoquée par le contraste brutal entre une zone brillamment éclairée et la zone immédiatement voisine restée dans l'ombre. Lorsque le contraste est moins violent, que la transition est progressive, comme par exemple, lorsqu'on utilise pour tous les vitrages des verres imprimés diffusants, la gène disparaît. Mais alors, globalement, le niveau d'éclairement est toujours diminué ce qui diminue inutilement les apports lumineux ou énergétiques du local ou de la serre.

L'invention se donne pour mission de supprimer les contrastes violents dans les serres ou les locaux à éclairage naturel sans pour autant diminuer indûment le niveau global de l'énergie et/ou de la lumière qui y pénètre(nt).

Lorsque le soleil éclaire directement l'intérieur d'un local, destiné à recevoir des personnes, comme un atelier, ou des végétaux, comme une serre, la surface au sol n'est jamais intégralement éclairée. En effet, toutes les parois du local ne sont pas uniformément transparentes et il existe donc des ombres portées. Le domaine de transition entre la pleine ombre et la pleine lumière qu'on appelle la pénombre n'a pas la même importance pour toutes les transitions ombre-lumière ni en tous points de la frontière qui les sépare. Lorsque la surface où l'ombre est projetée est proche de l'arête dont la projection réalise cette frontière, la pénombre est très étroite et au contraire, lorsque la distance s'accroît, la pénombre s'élargit. Ainsi à 2 mètres de distance, la pénombre est large de 17 mm tandis qu'à 20 cm elle n'a plus que 1,7 mm de largeur. On voit ainsi que si par exemple, la zone ensoleillée directement bénéficie d'une intensité lumineuse de 50 000 lux tandis que la zone ombrée n'en a que 4000, la transition sera plus brutale et le contraste plus gênant dans le second cas que dans le premier. Pour les plantes en particulier, on voit que si l'on est proche de la partie qui porte ombre, une même feuille sera échauffée puissamment sur une partie de sa surface tandis que le reste se maintiendra pratiquement à la température de l'air ambiant. A deux mètres en revanche, la transition s'effectuerait sur les 17 mm calculés plus haut et les zones extrêmes concerneraient en général des plantes différentes ou au moins, des rameaux différents.

Les solutions traditionnelles à ce problème consistent à équiper les baies ou les parois d'éléments diffusants comme des voilages ou des verres laminés diffusants. L'inconvénient de ces systèmes, qui rendent les transitions plus douces là où elles auraient été brutales en leur absence, réside dans la rétrodiffusion. En effet, les systèmes diffusants transforment un faisceau de rayons parallèles en une multitude de rayons réémis dans toutes les directions de l'espace. Vers l'intérieur, cette lumière diffusée s'ajoute au faisceau transmis directement qui a vu son intensité diminuée. Mais une fraction non négligeable de la lumière diffusée l'est dans une direction opposée à celle des rayons incidents et est ainsi renvoyée du côté de la source lumineuse : le rendement de captage du système diminue. Etant donné que dans les solutions classiques c'est toute la paroi qui est remplacée par une paroi diffusante, le rendement de captage est inutilement diminué en tout point par les systèmes diffusants.

D'autres systèmes plus élaborés ont également été proposés, ils préconisent l'utilisation de verres laminés pourvus de structures à motifs prismatiques ou pyramidaux. Ainsi le brevet français FR-A-2 096 979 propose des prismes à section triangulaire d'axe horizontal pour diriger la lumière solaire directe vers le fond des locaux, de même le brevet français FR-A-2 308 753 propose des toitures de serres dont les surfaces sont équipées de pyramides creuses analogues à l'empreinte d'un outil équipé de pointes de diamant. Le but de cette dernière structure est double : utiliser au maximum les rayons rasants du soleil matinal et atténuer l'ardeur du soleil de la mi-journée.

Les systèmes précédents qui ont leur efficacité, en particulier pour changer la répartition lumineuse à l'intérieur des locaux, spécialement pour les incidences rasantes ont également la propriété de limiter les contrastes entre les zones d'ombre et de lumière dans la partie éclairée. Cependant comme les verres imprimés diffusants traditionnels, ils diminuent très sensiblement et uniformément sur toute leur surface, l'énergie transmise.

Il est en outre connu du brevet DE-A-1 061 979 de revêtir les parties supérieure et inférieure d'un pare-brise pour véhicule d'un revêtement en dégradé destiné à absorber l'énergie solaire, tout en conservant au pare-brise dans sa partie médiane une haute transmission lumineuse.

Les vitrages selon l'invention ont une transmission énergétique modifiée localement et sont alors conçus de manière à ce qu'étant destinés à équiper des locaux type vérandas ou serres, ils présentent une diminution progressive de la transmission énergétique de sorte que, une fois posés, il y ait une transmission énergétique d'autant plus grande que leur distance par rapport à la zone insolée est grande. Un mode de réalisation du vitrage selon l'invention consiste à ce que, une fois posé dans une paroi sensiblement verticale du local type véranda ou serre, sa transmission énergétique directe soit croissante du bas vers le haut de la paroi.

Les vitrages selon l'invention ont donc une transmission directe d'autant plus grande que leur distance par rapport à la zone insolée est grande, cette variation de la transmission directe se fait avantageusement à l'intérieur d'un même élément de vitrage.

Dans une variante de l'invention, la variation de la transmission directe est obtenue grâce à une modification de la transmission spectrale du vitrage, modification réalisée de préférence grâce à une couche mince. Dans une autre variante, c'est le rapport lumière transmise directement et lumière diffusée qui est modifié. Dans ce dernier cas, cette diffusion est obtenue soit grâce à un verre imprimé dont le relief varie localement, soit grâce à un verre feuilleté dont la feuille intercalaire est chargée de manière progressive en particules diffusantes.

L'invention propose également un dispositif, rouleau lamineur à relief progressif, pour réaliser le verre imprimé selon l'invention.

Les figures et la description qui suivent permettront de comprendre et de mettre en oeuvre l'invention.

La figure 1 représente une serre équipée d'un vitrage en verre imprimé selon l'invention,

La figure 2 montre l'application du vitrage de l'invention à une véranda de maison individuelle,

Les figures 3 et 4 présentent un rouleau lamineur permettant la réalisation d'un verre imprimé de l'invention.

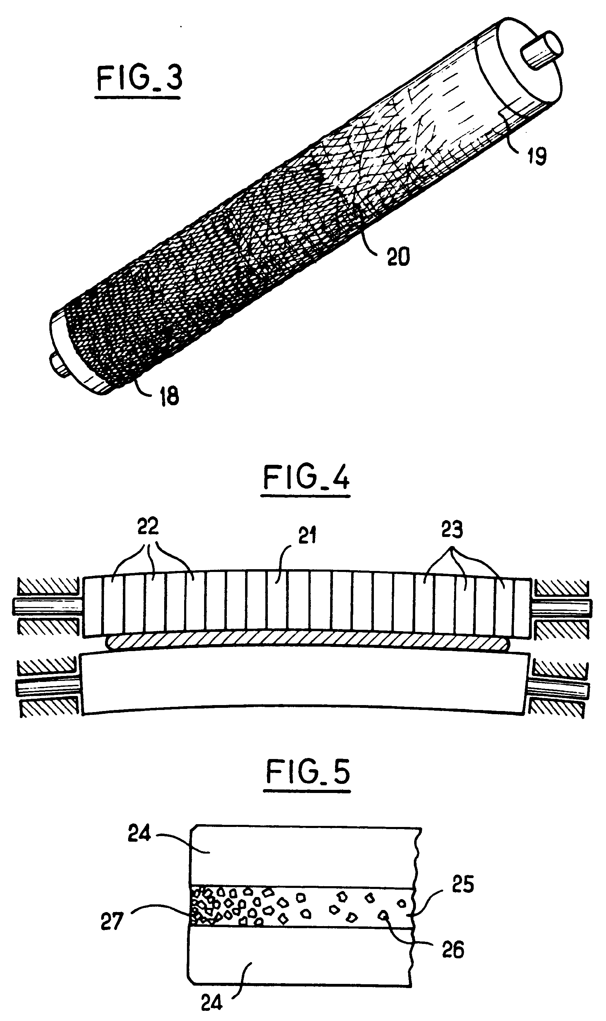

Quant à la figure 5, elle montre un verre feuilleté conforme à l'invention.

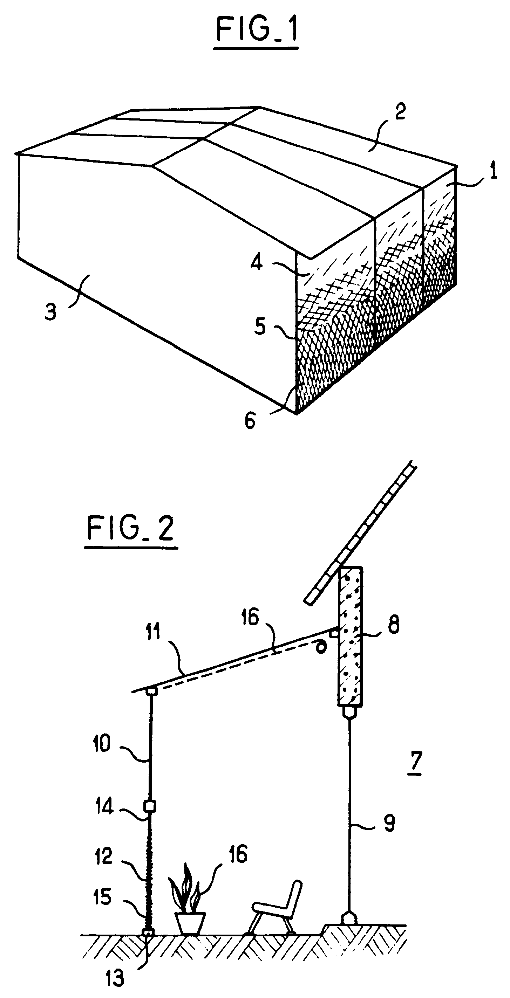

Les figures 1 et 2 présentent ainsi deux exemples de mise en oeuvre des vitrages selon l'invention. Sur la figure 1, il s'agit d'une serre horticole et sur la figure 2 d'une maison individuelle.

Le schéma de la figure 1 présente en 1 le vitrage de l'invention qui équipe les piédroits d'une serre dont les autres éléments tels que le toit transparent 2 ou le pignon, également transparent 3 ne sont pas détaillés. Trois vitrages identiques, par exemple avec des dimensions de 1,80 m de hauteur et 1,00 m en largeur équipent les piédroits. Ces vitrages ont une structure qui leur permet de transmettre la lumière solaire directe pratiquement sans la perturber en partie haute 4, de l'atténuer légèrement dans la partie médiane 5 et fortement dans la partie inférieure 6. On voit qu'ainsi le contraste entre les zones d'ombre portées et les zones de pleine lumière sera diminué justement dans les zones où le vitrage est proche de la partie éclairée (le sol) c'est-à-dire là où la transition ombre-lumière est la plus brutale. En revanche, dans la partie supérieure du piédroit, là où le vitrage et ses supports qui produisent les ombres sont éloignés de la surface éclairée, la lumière directe est transmise à son maximum.

De même, la figure 2 qui schématise la partie latérale du rez-de-chaussée d'une habitation 7 avec son mur 8, sa baie vitrée 9, présente une véranda appuyée sur le mur 8. Celle-ci est constituée d'une paroi verticale transparente et d'une toiture également transparente 11. La paroi verticale comporte deux parties, une partie supérieure 10, constituée de verre ordinaire transparent qui transmet sans modification - sauf un léger amenuisement par la réflexion et la faible absorption du verre ordinaire - et en partie basse, un vitrage selon l'invention 12. Celui-ci est installé dans le cadre 13. Il permet de diminuer la transmission directe de lumière depuis la partie haute 14 du vitrage jusqu'à la partie basse 15. On voit qu'ainsi, le fort contraste qui existerait au niveau des végétaux 16 est sensiblement réduit. En revanche, l'énergie solaire qui traverse le vitrage clair 10 ou la partie supérieure 14 du vitrage selon l'invention 12, est transmise sans diminution inutile. Un rideau 16 permet cependant d'éviter les surchauffes.

Les exemples de réalisation qui suivent permettront de se représenter concrètement le fonctionnement de l'invention.

Exemple 1.

Dans cet exemple qui constitue la forme préférée de l'invention, celle-ci est mise en oeuvre grâce à l'utilisation de verre laminé imprimé. De manière traditionnelle, les verres imprimés sont fabriqués par laminage de verre à l'état pâteux qui sort à débit régulier d'un four à bassin. En général, l'un des rouleaux - le plus souvent le rouleau supérieur - de la lamineuse possède une surface rugueuse, dont le relief est complémentaire de celui qu'on veut imprimer dans la surface de la plaque de verre. L'autre rouleau est le plus souvent lisse mais parfois, sa surface est elle-même structurée. Sur toute la périphérie du rouleau imprimeur, la structure est la même car justement, pour toutes les applications usuelles, on souhaite disposer d'une surface identique en tout point, tout écart par rapport à cette régularité provoquant un défaut d'aspect du produit fini.

Pour réaliser un vitrage conforme à l'invention, on utilise un rouleau imprimeur tout différent des rouleaux traditionnels. En effet il a la caractéristique d'avoir un relief qui évolue au fur et à mesure qu'on se déplace le long de son axe.

La figure 3 représente une forme de réalisation d'un tel rouleau. Il est très rugueux à l'une de ses extrêmités 18 tandis qu'il est pratiquement lisse à son autre extrêmité 19, la rugosité évoluant de manière continue entre ces deux extrêmes. On voit ainsi qu'un verre imprimé laminé avec un tel rouleau aura une rugosité moyenne dans le milieu de sa largeur correspondant à la zone 20 du rouleau. Tandis que ses deux bords seront, pour l'un, très rugueux et donc très diffusant, c'est celui qui correspond à l'extrêmité 18 du rouleau, et pour l'autre bord, lisse et transmettant donc la lumière parallèle du faisceau solaire sans aucune modification quant à sa direction. On pourra ainsi réaliser aisément les vitrages 1 des piédroits de la serre représentée figure 1, la zone 18 du rouleau lamineur engendrant la partie basse 6 du vitrage tandis que la zone 19 produira, elle, la zone supérieure 4 du même vitrage.

Un autre type de rouleau lamineur peut également être utilisé pour créer un vitrage conforme à l'invention : dans le brevet francais FR 1 276 153, on décrit un rouleau lamineur particulier développé dans le but de compenser les déformations thermiques qui affectent d'une manière générale de tels rouleaux. La solution proposée consiste à utiliser comme surface de contact avec le verre non pas la surface externe du rouleau proprement dit, mais au contraire de recouvrir celle-ci d'une série de manchons dont la longueur selon l'axe est réduite. On voit représenté figure 4 un tel système de laminage.

Pour réaliser un vitrage selon l'invention, on utilise un tel rouleau lamineur équipé de manchons 21, ceux-ci ayant une surface de plus en plus rugueuse lorsqu'on regarde le rouleau, d'une extrêmité vers l'autre. Ainsi, les manchons 22 possèdent le relief le plus accusé, tandis que les manchons 23 sont pratiquement lisses. En utilisant un tel rouleau lamineur, on obtient un verre coulé imprimé avec des bandes parallèles au bord, très diffusantes près d'un bord avec une décroissance de cette diffusion lorsqu'on passe d'une bande à l'autre en allant vers l'autre bord qui est pratiquement lisse.

Il est évident que la progression de la diffusion d'un bord vers l'autre peut être ajustée aux besoins. En particulier, dans le cas de la véranda d'une maison individuelle, ce pourra n'être que la partie inférieure du vitrage qui est plus ou moins diffusante, par exemple sur une hauteur de 50 cm tandis que le reste du vitrage est lisse sur une hauteur de, par exemple, 130 cm. Dans ce cas-là, les végétaux placés le long du vitrage sont efficacement protégés contre les surchauffes locales tandis que le reste du local bénéficie de l'ensoleillement maximum. Un avantage non négligeable de l'utilisation d'un tel produit dans une maison individuelle se retrouve dans les problèmes d'entretien : lorsqu'un vitrage descend jusqu'au sol comme dans la véranda de la figure 2, c'est la partie voisine du sol qui est le plus exposée aux salissures dues en particulier à la pluie qui en tombant sur le sol projette des particules sur le vitrage. Le fait que le vitrage selon l'invention ait justement dans cette zone une surface rugueuse où les salissures sont peu visibles est particulièrement intéressant car il permet d'espacer les séances de nettoyage dans le temps.

Exemple 2.

L'exemple du vitrage précédent utilisait le phénomène de la diffusion de la lumière, c'est-à-dire que les rayons lumineux incidents qui n'étaient pas transmis directement par le verre subissaient un changement de direction à la traversée du vitrage. Le présent exemple utilise les phénomènes de réflexion ou d'absorption spectrale de la lumière c'est-à-dire que les rayons incidents qui sont transmis de l'autre côté du vitrage n'ont pas changé de direction mais qu'en revanche, leur composition spectrale s'est vue modifiée à la traversée du vitrage. C'est cette modification qui - conformément à l'invention - n'est pas la même en chaque point.

Il existe de nombreuses méthodes pour déposer sur du verre plat des couches minces absorbantes ou/et réfléchissantes. Les plus intéressantes pour réaliser les vitrages de l'invention sont les techniques pyrolytiques dans lesquelles les composés organiques d'un ou plusieurs métaux sont mis en contact avec le verre chaud à une température supérieure à 400 °C. A son contact ils se dissocient pour former un ou plusieurs composés des métaux en question, généralement des oxydes qui donnent au verre plat ainsi traité les performances de réflexion et d'absorption souhaitées. Parmi ces techniques, le technique dite de "spray" dans laquelle on pulvérise sur du verre chaud, à la sortie d'un bain float, une solution de sels organiques de métaux tels que le cobalt, le fer, le chrome etc... permet une mise en oeuvre facile du procédé de l'invention mais d'autres techniques telles que le dépôt de poudres de composés organiques ou la diffusion d'ions dans le verre directement sur le bain float permettraient aussi de mettre en oeuvre le procédé de l'invention. Mais c'est la pyrolyse liquide qui a été choisie pour illustrer cet exemple-ci. Dans le brevet FR 2 277 785 on décrit un tel procédé où l'on diminue l'écoulement de la solution lorsque le pulvérisateur en mouvement transversal approche du bord de la feuille. Cette technique qui avait été mise au point à l'origine pour économiser les quantités de solution utilisées permet, en diminuant progressivement les quantités distribuées lorsqu'on passe d'un bord à l'autre de la feuille de verre d'obtenir une couche mince dont l'épaisseur décroit dans la largeur de la feuille de verre.

Une grandeur intéressante à considérer est la transmission énergétique $T_E$. C'est le rapport entre l'énergie transmise par le vitrage et l'énergie solaire incidente. Pour un verre plat de 4 mm elle est en général de l'ordre de 0,86. Avec une couche d'oxydes de chrome, de fer et de cobalt obtenue par pulvérisation d'une solution d'acétylacétonates des mêmes métaux dans l'heptane sur le verre à 620 °C, on obtient classiquement une transmission énergétique de 0,55 sur le même verre de 4 mm. La technique précédente permet d'obtenir un ruban de verre flotté de 3,20 mm de large avec une transmission énergétique de 0,55 sur un bord qui augmente progressivement lorsqu'on s'éloigne du bord. Dans le cas où cette variation est linéaire et se produit sur une largeur de 120 cm, on obtient les résultats suivants :

| Cote (en cm) | 0 | 20 | 40 | 60 | 80 | 100 | 120 |
|---|---|---|---|---|---|---|---|
| Epaisseur (%) | 100 | 83 | 67 | 50 | 33 | 17 | 0 |
| $T_E$ | 0,55 | 0,59 | 0,64 | 0,69 | 0,74 | 0,80 | 0,86 |

Le vitrage ainsi obtenu peut être utilisé dans sa largeur de fabrication pour équiper le piédroit d'une serre sur une hauteur de 3,20 m. Au niveau du sol la transmission énergétique est de 0,55, elle s'accroit progressivement pour atteindre 0,86 à 1,20 m de hauteur puis elle reste constante jusqu'à la hauteur de 3,20 m.

Exemple 3.

Dans cet exemple, comme dans l'exemple 1, la modification de la transmission lumineuse directe est obtenue par un phénomène de diffusion lumineuse.

Une technique permettant d'incorporer dans la feuille plastique intercalaire d'un vitrage feuilleté des particules étrangères a été décrite, en particulier dans la demande de brevet 89FR-14111. Lorsque cette technique est utilisée pour noyer dans la feuille intercalaire dont l'indice de réfraction est - dans le cas du polyvinylbutyral (PVB) - de 1,48, des fragments d'un verre d'indice élevé, par exemple, en "flint" d'indice 1,60 on obtient un effet de diffusion qui - pour une taille de particules données - est d'autant plus grand que la densité des particules dans la feuille intercalaire est plus importante. Pour réaliser un vitrage conforme à l'invention, on fait varier de manière continue cette densité lorsqu'on s'éloigne du bord du vitrage. La figure 5 représente schématiquement un tel vitrage.

On voit en 24 les verres extérieurs avec une épaisseur unitaire de 3 mm. Ils sont reliés par un film de PVB 25 d'épaisseur 1,1 mm dans lequel sont noyés des petits fragments d'un matériau d'indice supérieur 26. On voit qu'à l'un des bords, en 27, la densité des particules est forte et qu'elle décroit progressivement lorsqu'on s'éloigne de ce bord. La figure 5 est très schématique et l'on a représenté sur quelques centimètres la variation de densité des particules qui se produit en réalité sur des distances bien supérieures, par exemple de l'ordre du mètre.

Un vitrage réalisé par la méthode précédente, installé sur la paroi verticale d'une véranda comme celle de la figure 2 permet d'éviter que les plantes placées à son voisinage ne subissent des contrastes d'ombre et de lumière trop importants.

Les exemples qui précèdent constituent des méthodes différentes pour réaliser les vitrages selon l'invention. Ceux-ci mis en oeuvre comme paroi d'un local destiné à recevoir des végétaux ou à être occupé par des personnes permet d'éviter les inconvénients habituels des autres types de vitrages. Par rapport aux verres polis transparents incolores, équipant complètement la paroi, ils permettent d'éviter les contrastes trop violents entre zones insolées et zones d'ombre portée ; par rapport aux verres polis transparents colorés, et par rapport aux verres imprimés diffusants unis, ils permettent de bénéficier en partie haute de l'énergie solaire maximum disponible.

De plus, spécialement dans leur variante "imprimé diffusant progressif" lorsqu'elle descend jusqu'au niveau du sol, les vitrages de l'invention permettent de limiter l'effet des salissures.

## Revendications

1. Vitrage dont la transmission énergétique est modifiée localement, caractérisé en ce qu'étant destiné à équiper des locaux pour l'éclairage naturel et notamment des serres, il présente une diminution progressive de la transmission énergétique de sorte que, une fois posé, il y ait une transmission énergétique d'autant plus grande que sa distance par rapport à la zone insolée du local ou de la serre est grande.

2. Vitrage selon la revendication 1, caractérisé en ce qu'une fois posé dans une paroi sensiblement verticale du local ou de la serre, sa transmission directe est croissante du bas vers le haut de la paroi.

3. Vitrage selon l'une des revendications précédentes, caractérisé en ce que la variation de transmission directe se produit à l'intérieur d'un même élément du vitrage (1).

4. Vitrage selon l'une ou plusieurs des revendications précédentes, caractérisé en ce que la modification de la transmission est obtenue en modifiant la répartition spectrale de la lumière incidente.

5. Vitrage selon la revendication 4, caractérisé en ce que la coloration du vitrage est obtenue par une couche mince.

6. Vitrage selon l'une des revendications 1, 2 ou 3, caractérisé en ce que la variation de transmission directe est obtenue par diffusion lumineuse.

7. Vitrage selon la revendication 6, caractérisé en ce que la diffusion de la lumière est produite par la structure superficielle d'un verre imprimé.

8. Vitrage selon la revendication 4 ou la revendication 6, caractérisé en ce que la variation de la transmission directe est causée par le film intercalaire (25) d'un verre feuilleté (24).

9. Vitrage selon la revendication 8, caractérisé en ce qu'on a incorporé au film plastique intercalaire (25) des particules (26) d'indice de réfraction différent.

10. Vitrage caractérisé en ce qu'il se compose d'éléments transparents et d'éléments de vitrage selon l'une ou plusieurs des revendications précédentes.

11. Procédé pour réaliser un vitrage selon l'une des revendications 1 à 10, destiné à l'éclairage naturel ou aux serres et dont la transmission directe est d'autant plus grande que sa distance par rapport à la zone insolée est plus grande, caractérisé en ce qu'on lamine à chaud une feuille d'une matière thermoplastique transparente avec au moins un rouleau dont le relief varie d'un bord à l'autre de la feuille.

12. Procédé selon la revendication 11, caractérisé en ce que la matière thermoplastique est un verre silico-sodo-calcique.

13. Dispositif pour mettre en oeuvre le procédé selon la revendication 11 ou la revendication 12, caractérisé en ce qu'il est constitué de rouleaux lamineurs dont au moins un possède un relief dont la rugosité croît d'une extrêmité à l'autre.

14. Application d'un vitrage selon l'une des revendications 1 à 10, dont la transmission directe est d'autant plus grande que sa distance par rapport à la zone éclairée à travers lui est grande à la réalisation des serres.

15. Application selon la revendication 14 dans laquelle le vitrage équipe les piédroits d'une serre.

**Patentansprüche**

1. Verglasung mit lokal veränderter Energiedurchlässigkeit, **dadurch gekennzeichnet, daß** sie zur Ausstattung von Räumlichkeiten und insbesondere Gewächshäuser bestimmt ist, um diese mit Tageslicht zu beleuchten, und daß sie eine progressive Verringerung der Energiedurchlässigkeit derart aufweist, daß nach ihrer Anbringung die Energiedurchlässigkeit mit wachsender Entfernung vom beleuchteten Bereich der Räumlichkeit oder des Gewächshauses ansteigt.

2. Verglasung nach Anspruch 1, dadurch gekennzeichnet, daß, nachdem sie in einer im wesentlichen senkrechten Wand der Räumlichkeit oder des Gewächshauses angebracht worden ist, ihre direkte Durchlässigkeit vom unteren zum oberen Bereich der Wand ansteigt.

3. Verglasung nach Anspruch 1 oder 2, dadurch gekennzeichnet, daß die Veränderung der direkten Durchlässigkeit im Inneren ein und desselben Glasscheibenelements (1) vor sich geht.

4. Verglasung nach einem oder mehreren der vorhergehenden Ansprüche, dadurch gekennzeichnet, daß die Veränderung der Durchlässigkeit durch Veränderung der Spektralverteilung des einfallenden Lichtes erreicht wird.

5. Verglasung nach Anspruch 4, dadurch gekennzeichnet, daß die Färbung der Glasscheibe durch eine dünne Schicht erzielt wird.

6. Verglasung nach einem der Ansprüche 1, 2 oder 3, dadurch gekennzeichnet, daß die Veränderung der direkten Durchlässigkeit durch Lichtstreuung erhalten wird.

7. Verglasung nach Anspruch 6, dadurch gekennzeichnet, daß die Lichtstreuung durch die Oberflächenstruktur eines geprägten Glases erfolgt.

8. Verglasung nach Anspruch 4 oder 6, dadurch gekennzeichnet, daß die Veränderung der direkten Durchlässigkeit durch die Zwischenschicht (25) eines Verbundglases (24) bewirkt wird.

9. Verglasung nach Anspruch 8, dadurch gekennzeichnet, daß in die plastische Zwischenschicht (25) Partikel (26) mit unterschiedlichem Brechungsindex eingebaut werden.

10. Verglasung, dadurch gekennzeichnet, daß sie aus durchsichtigen Elementen und Glasscheibenelementen nach einem oder mehreren der vorhergehenden Ansprüche besteht.

11. Verfahren zur Herstellung einer Verglasung nach einem der Ansprüche 1 bis 10, die zur Beleuchtung mit Tageslicht oder von Gewächshäuern vorgesehen ist und deren direkte Durchlässigkeit mit wachsender Entfernung vom beleuchteten Bereich ansteigt, dadurch gekennzeichnet, daß eine Scheibe aus einem durchsichtigen thermoplastischen Stoff mit wenigstens einer Walze, deren Relief sich von einem Rand der Scheibe zum anderen ändert, warmgewalzt wird.

12. Verfahren nach Anspruch 11, dadurch gekennzeichnet, daß der thermoplastische Stoff ein Kalk-Natron-Silicat-Glas ist.

13. Vorrichtung zur Durchführung des Verfahrens nach Anspruch 11 oder 12, dadurch gekennzeichnet, daß sie aus Walzrollen besteht, von denen wenigstens eine ein Relief aufweist, dessen Rauhtiefe von einem Ende zum anderen ansteigt.

14. Verwendung einer Verglasung nach einem der Ansprüche 1 bis 10, deren direkte Durchlässigkeit mit wachsender Entfernung vom durch sie beleuchteten Bereich ansteigt, zur Herstellung von Gewächshäusern.

15. Verwendung nach Anspruch 14, in welcher die Glaswände eines Gewächshauses mit der Verglasung ausgestattet sind.

**EP 0 448 456 B1**

## Claims

1. Glazing pane, the energy transmission of which is locally modified, characterized in that, being intended for fitting in rooms or buildings for natural lighting and notably greenhouses, it has a progressive reduction of the energy transmission such that, once the pane is in position, there shall be an energy transmission that increases with increasing distance of the pane from the sunlit zone of the room or greenhouse.

2. Pane according to Claim 1, characterized in that, once positioned in a substantially vertical wall of the room or greenhouse, its direct transmission increases from bottom to top of the wall.

3. Pane according to one of the preceding Claims, characterized in that the variation in direct transmission takes place within a single element of the glazing (1).

4. Pane according to one or more of the preceding Claims, characterized in that the modification to the transmission is obtained by modifying the spectral distribution of the incident light.

5. Pane according to Claim 4, characterized in that the colouration of the pane is obtained by a thin film.

6. Pane according to one of Claims 1, 2 or 3, characterized in that the variation of direct transmission is obtained by light diffusion.

7. Pane according to Claim 6, characterized in that the diffusion of the light is produced by the surface structure of a printed glass.

8. Pane according to Claim 4 or Claim 6, characterized in that the variation of the direct transmission is caused by the intermediate film (25) of a laminated glass (24).

9. Pane according to Claim 8, characterized in that particles (26) having different refractive indices have been incorporated into the intermediate plastics film (25).

10. Pane, characterized in that it is composed of transparent elements and of glazing elements according to one or more of the preceding Claims.

11. Process for making a pane according to one of Claims 1 to 10, intended for natural lighting or for greenhouses, and the direct transmission of which increases with increasing distance of the pane from the sunlit zone, characterized in that a sheet of a transparent thermoplastics material is hot-rolled with at least one roller, the relief of which varies from one edge to the other of the sheet.

12. Process according to Claim 11, characterized in that the thermoplastics material is a silico-sodo-calcic glass.

13. Device for carrying out the process according to Claim 11 or Claim 12, characterized in that it is constituted of calendering rollers, at least one of which possesses a relief, the rugosity of which increases from one end to the other.

14. Application of a glazing pane according to one of Claims 1 to 10, the direct transmission of which increases with Increasing distance of the pane from the zone illuminated through it, to the construction of greenhouses.

15. Application according to Claim 14, in which the pane is fitted to the columns of a greenhouse.

## FIG_1

## FIG_2

## FIG_3

19

20

18

## FIG_4

22      21      23

## FIG_5

24

25

27

26

24